# EUROPÄISCHE PATENTSCHRIFT

(11) **EP 3 102 812 B1**
(45) Veröffentlichungstag und Bekanntmachung des Hinweises auf die Patenterteilung: **18.05.2022**
(21) Anmeldenummer: 15725377.4
(22) Anmeldetag: 01.06.2015
(51) Int. Cl.: F02D 35/02, F02P 5/152, G01L 23/22, F02D 41/00, F02D 41/14, F02D 41/30

(54) **VERFAHREN ZUR INTERPRETIERENDEN ERKENNUNG EINER VORENTFLAMMUNG IN EINEM BRENNRAUM EINES VERBRENNUNGSMOTORS**
METHOD FOR THE INTERPRETIVE IDENTIFICATION OF PREMATURE IGNITION IN A COMBUSTION CHAMBER OF AN INTERNAL COMBUSTION ENGINE
PROCÉDÉ DE DÉTECTION INTERPRÉTATIVE D'UN PRÉ-ALLUMAGE DANS UNE CHAMBRE DE COMBUSTION D'UN MOTEUR À COMBUSTION INTERNE

(30) Priorität: 07.08.2014 DE 102014215657
(43) Veröffentlichungstag der Anmeldung: 14.12.2016
(73) Patentinhaber: Volkswagen Aktiengesellschaft, 38440 Wolfsburg (DE)
(72) Erfinder: TREBESIUS, Samuel, 29399 Wahrenholz (DE); KLIE, Stefan, 38102 Braunschweig (DE); SPRYSCH, Andreas, 31234 Edemissen (DE); BLUME, Holger, 30519 Hannover (DE)
(74) Vertreter: Gulde & Partner
(86) Internationale Anmeldenummer: PCT/EP2015/062177
(87) Internationale Veröffentlichungsnummer: WO 2016/020083

(56) Entgegenhaltungen:
- WO-A2-01/79678
- DE-A1- 19 859 310
- DE-A1-102011 012 100
- DE-B3-102007 024 415
- DE-B3-102009 008 247
- FR-A1- 2 923 294
- MUDDASSAR ABBAS RIZVI ET AL: "Hybrid Model of the Gasoline Engine for Misfire Detection", IEEE TRANSACTIONS ON INDUSTRIAL ELECTRONICS, IEEE SERVICE CENTER, PISCATAWAY, NJ, USA, Bd. 58, Nr. 8, 1. August 2011 (2011-08-01) , Seiten 3680-3692, XP011370076, ISSN: 0278-0046, DOI: 10.1109/TIE.2010.2090834

## Beschreibung

Die Erfindung betrifft ein Verfahren zur interpretierenden Erkennung einer Vorentflammung in einem Brennraum eines Verbrennungsmotors. Die Erfindung betrifft weiterhin ein zur Durchführung des Verfahrens geeignetes Steuergerät und eine Brennkraftmaschine mit einem solchen Steuergerät.

Im Automobilbau besteht der Trend, die als Antriebsmotoren genutzten Brennkraftmaschinen zur Erhöhung des Wirkungsgrads kleinervolumig auszulegen, wobei ein damit einhergehender Leistungsverlust durch eine Aufladung kompensiert wird. Dieses Vorgehen ist jedoch tendenziell mit einer erhöhten thermischen Belastung der Brennkraftmaschinen, insbesondere auch in den Brennräumen verbunden. Gleiches gilt für den ebenfalls anhaltenden Trend zu höheren Verdichtungen des Kraftstoff-Luft-Gemisches in den Brennräumen, wodurch insbesondere Wirkungsgradsteigerungen für die Brennkraftmaschinen erreicht werden sollen. Höhere thermische Belastungen erhöhen die Gefahr des Auftretens von Vorentflammungen in den Brennräumen.

Unter einer Vorentflammung versteht man eine ungewollte und vorzeitige Entflammung eines Kraftstoff-Luft-Gemisches, die bei Hubkolbenbrennkraftmaschinen in der Regel gegen Ende der Kompressionsphase und somit in der Nähe des oberen Totpunkts des entsprechenden Kolbens und noch vor der Erzeugung des die gewollte Verbrennung auslösenden Zündfunkens auftritt. Ursachen für Vorentflammungen können in lokal über der Zündtemperatur des Kraftstoff-Luft-Gemisches liegenden Gastemperaturen oder Körpertemperaturen von beispielsweise Brennraumwänden oder im Brennraum befindlichen Elementen/Partikeln (dann auch als Glühzündung bezeichnet) liegen. Vorentflammungen führen dazu, dass die Kolben einem teilweise stark erhöhten Druck ausgesetzt sind, der wiederum zu einer Beschädigung des Kolbens führen kann.

Sofern Vorentflammungen auftreten, sind diese in der Regel keine Einzelphänomene, sondern treten in Serien, d.h. mehrfach in einem relativ kurzen Zeitraum, auf. Dies erhöht die Gefahr von Schäden an der Brennkraftmaschine, ermöglicht jedoch gleichzeitig, nach einer Erkennung einer Vorentflammung geeignete Maßnahmen zu ergreifen, um nachfolgende Vorentflammungen zu unterbinden. Hierfür ist es jedoch notwendig, eine möglichst exakte Erkennung von Vorentflammungen zu gewährleisten.

Aus der DE 10 2007 024 415 B3 ist ein Verfahren zur Erkennung einer Vorentflammung einer fremdgezündeten Brennkraftmaschine mit wenigstens einem Zylinder bekannt. Gemäß dem Verfahren wird eine Winkelgeschwindigkeit der Kurbelwelle eines ersten Zeitintervalls im Arbeitsablauf der Brennkraftmaschine gemessen. Ferner wird ein Klopfsignal mittels eines Körperschallsensors während eines zweiten Zeitintervalls im Arbeitsablauf der Brennkraftmaschine erkannt. Eine Vorentflammung des Zylinders wird angenommen, wenn die Drehgeschwindigkeit der Kurbelwelle gegenüber einem Vergleichswert verlangsamt ist, und aufgrund des Klopfsignals eine klopfende Verbrennung erkannt wird.

Nachteilig an dem aus der DE 10 2007 024 415 B3 bekannten Verfahren ist der sehr hohe Applikationsaufwand, da eine verlässliche Erkennung einer Vorentflammung, die auf einem Rückschluss aufgrund einer "ungewöhnlichen", zeitlich nicht passenden Änderung der Winkelgeschwindigkeit der Kurbelwelle beruht, eine exakte Kalibrierung des Systems erfordert. Derartige Winkelgeschwindigkeitsänderungen können nämlich auch andere Ursachen haben, wie beispielsweise Toleranzen sowie individuelles Spiel der Komponenten der Brennkraftmaschine, insbesondere auch eines zur Auswertung der Winkelgeschwindigkeit genutzten Geberrads (Geberradfehler). Zudem werden Brennkraftmaschinen einer Bauart regelmäßig in eine Vielzahl von unterschiedlichen Fahrzeugen und eine noch größere Anzahl an sich zumindest geringfügig unterscheidende Antriebsstränge integriert. Unterschiede in den Antriebssträngen können jedoch einen nicht unerheblichen Einfluss auf die Gleichförmigkeit der Drehbewegung der Kurbelwelle haben. Dies kann es erforderlich machen, für alle möglichen Antriebsstrangkonfigurationen einer Brennkraftmaschine eine Applikation durchzuführen, bei der durch Messungen der Brennräumdrücke und einen Vergleich mit ermittelten Winkelgeschwindigkeitsänderungen exakt solche Winkelgeschwindigkeitsänderungen identifiziert und hinsichtlich der relativen Lagen bezüglich einer Kurbelwellenumdrehung definiert werden, die aus Vorentflammungen resultieren. Nur so kann für einen späteren Nutzungsbetrieb der Brennkraftmaschine beziehungsweise des Antriebsstrangs eine ausreichend sichere Erkennung von Vorentflammungen sichergestellt und Fehlerkennungen, die nicht auf Vorentflammungen beruhen und wegen der dann gegebenenfalls eingeleiteten, unnötigen Gegenmaßnahmen nachteilig sind, möglichst vermeiden werden.

Trotz des erheblichen Aufwands kann mittels derartiger Applikationen lediglich eine Anpassungen des Erkennungsverhaltens des in der DE 10 2007 024 415 B3 beschriebenen Verfahrens nur an verschiedene, eine Brennkraftmaschine einer Bauart integrierende Antriebsstränge erreicht werden. Serienstreuungen, wodurch sich Antriebsstränge derselben Bauart individuell nicht unerheblich in ihrer Betriebscharakteristik unterscheiden, können dadurch nicht erfasst und ausgeglichen werden. Vielmehr müssen solche Serienstreuungen durch die Definition ausreichend großer Toleranzbereiche im Rahmen der Applikationen berücksichtigt werden. Derartige Toleranzbereiche verschlechtern jedoch grundsätzlich die Erkennungsgenauigkeit für Vorentflammungen.

Auf dem aus der DE 10 2007 024 415 B3 bekannten Verfahren aufbauend ist in der DE 10 2009 008 248 A1 offenbart, bei einer gleichzeitigen Erkennung von Vorentflammungs- und Klopfereignissen Maßnahmen zur Verhinderung von Klopfen, die insbesondere in einem kurzfristigen Verlagern des Zündwinkels nach spät bestehen können, zu unterbinden, da dadurch eine Vorentflammungsneigung verstärkt würde. Vielmehr werden bei einer gleichzeitigen Erkennung von Vorentflammungs- und Klopfereignissen konkrete Maßnahmen zur Unterbindung von Vorentflammungen getroffen, die insbesondere in einem temporären Einspritzen erhöhter Kraftstoffmengen, vorzugsweise zur Erzielung eines Lambdawert von < 0,9, liegen können. Durch diese Maßnahme soll ein Klopfen ebenfalls unterbunden werden können.

Die aus der DE 10 2009 008 248 A1 bekannte Weiterentwicklung des in der DE 10 2007 024 415 B3 offenbarten Verfahrens ändert nichts an dem hohen Kalibrieraufwand, der für eine möglichst sichere Erkennung von Vorentflammungsereignissen erforderlich ist.

Aus der DE 10 2011 103 427 A1 ist weiterhin ein Verfahren zur Klopfregelung einer Brennkraftmaschine bekannt, bei dem ein Istwert für einen Klopfpegel mit einem Sollwert verglichen und durch einen Zündwinkel als Stellgröße geregelt wird. Dabei werden der Istwert aus einem gleitenden Mittelwert des Klopfpegels und der Sollwert aus einem festen, vorbestimmten Anteil und einem variablen, adaptierbaren Anteil gebildet. Der vorbestimmte Anteil wird dabei in einer Entwicklungsphase der Brennkraftmaschine ermittelt, wozu bei einer oder mehreren exemplarischen Brennkraftmaschinen Motorsteuerungsbedatungen durchgeführt werden, indem für jeden Betriebspunkt und jeden Zylinder Zündwinkelvariationen durchgeführt werden, um jeweils kurzfristig ein deutliches Überschreiten der Klopfgrenze zu bewirken. Daraus werden betriebspunktabhängige und zylinderselektive Schwellenwerte (Klopfgrenze) erzeugt, die in der Motorsteuerung gespeichert werden. Bei der Durchführung dieser Entwicklungsphase anhand von mehreren exemplarischen Brennkraftmaschinen können repräsentative Mittelwerte für den vorbestimmten Anteil des Sollwertes ermittelt werden, wobei durch die Mittelung eine Serienstreuung berücksichtigt wird. In einer Nutzungsphase wird dann bei den individuellen Brennkraftmaschinen jeweils der adaptierbare Anteil des Sollwertes ermittelt. Diese Adaption sei notwendig, da jede individuelle Brennkraftmaschine eine individuelle Signalübertragung der klopfenden Verbrennung über die Motorstruktur und die auf Körperschall beruhende Sensorik zur Motorsteuerung besitzt. Die Adaption wird während des Betriebs der individuellen Brennkraftmaschinen, vorzugsweise während eines quasistationären Betriebs, durch eine Zündwinkelvariation erreicht, während der sich einstellende Klopfpegel erfasst wird. Der Verlauf des Klopfpegels über einer Zündwinkelsequenz wird dazu mit dem entsprechenden abgespeicherten Verlauf des Klopfpegels verglichen und Abweichungen der individuellen Brennkraftmaschinen von den exemplarisch zur Ermittlung des vorbestimmten Anteils des Sollwertes genutzten Brennkraftmaschinen ermittelt.

Das aus der DE 10 2011 103 427 A1 bekannte Verfahren ist nicht auf eine Erkennung einer Vorentflammung übertragbar, da wegen des häufigen Fehlens von hochfrequenten Anteilen von durch Vorentflammungen erzeugten Körperschalls die für eine Klopfregelung ausgebildeten Sensoren und Auswerteverfahren nicht mit ausreichender Erkennungssicherheit einsetzbar sind.

Die EP 2 256 236 A1 beschreibt ein Verfahren zur Erkennung einer fehlerhaften Funkenbildung. Hierbei werden die Funkenbrenndauern für die vier Zylinder der letzten zwei Motorumdrehungen ausgewertet. Aus diesen Funkenbrenndauern wird zunächst der Zylinder mit der längsten Funkenbrenndauer ermittelt. Die Funkenbrenndauern der anderen Zylinder werden gemittelt. Liegt dabei die Abweichung der Funkenbrenndauer des Zylinders mit der maximalen Funkenbrenndauer zum Mittelwert der Funkenbrenndauern der anderen Zylinder über einem vorgegebenen ersten Referenzwert, so wird eine Glühzündung erkannt. Ebenso kann durch das beschriebene Verfahren auch eine fehlerhafte Funkenbildung aufgrund einer anderen Ursache wie zum Beispiel einer defekten Spule oder eines Keramikschadens der Zündkerze festgestellt werden.

Aus der FR 2 923 294 A1 ist ein Verfahren bekannt, bei dem eine ungewollte Entzündung eines Kraftstoff-Luft-Gemisches in einem Brennraum einer auf einem Prüfstand betriebenen Brennkraftmaschine ermittelt wird, indem während mindestens eines Zyklus im Betrieb der Brennkraftmaschine der Druck in dem Brennraum gemessen und anhand eines Vergleichs der Messwerte mit einem konstanten Schwellenwert entschieden wird, ob die Maximalwerte für den Brennraumdruck einer gewollten Verbrennung oder einer ungewollten Verbrennung zuzuordnen sind. Dabei ist vorgesehen, dass die Unterscheidung auf einem Vergleich mit einem konstanten Schwellenwert beruht. Veränderlich ist dieser Schwellenwert jedoch für die Ermittlung eines möglichst exakten Schwellenwertes im Rahmen des Prüfstandbetriebs.

Als weiterer Stand der Technik wird die Druckschrift DE 10 2009 008 247 B3 genannt. Aus der Druckschrift geht bereits ein Verfahren zur Erkennung von Vorentflammungen bei einer Verbrennungskraftmaschine mit einer Fremdzündung hervor, wobei auf Grundlage der Signale einer Abtastung eines Geberrades eine Folge von Winkelwerten der Kurbel- oder Nockenwelle der Verbrennungskraftmaschine bestimmt wird, wobei weiter auf Grundlage eines Vergleiches aufeinanderfolgender Winkelwerte eine Erkennung von Vorentflammungen erfolgt, wobei Werte für die Drehgeschwindigkeit der Kurbel- oder Nockenwelle aus den Abtastwerten des Geberrades gebildet werden, wobei eine Bestimmung des Wertes einer Winkellage erfolgt, bei der ein gewisser Anteil der Drehzahlspanne, die während eines Bereiches eines Arbeitsspieles von der Kurbel- oder Nockenwelle überstrichen wird, erreicht ist, wobei über die Werte der Winkellage für vorangegangene Bereiche der Arbeitsspiele der gleitende Median ermittelt wird, wobei der Wert für die Winkellage eines aktuellen Bereiches des Arbeitsspieles, bei der der gewisse Anteil der Drehzahlspanne, die während des Bereiches des aktuellen Arbeitsspieles von der Kurbel- oder Nockenwelle überstrichen wird, bestimmt wird und dem gleitenden Mediangegenübergestellt wird, und wobei, wenn der Wert für die Winkellage des Bereiches des aktuellen Arbeitsspieles einen bestimmten Abstand zu dem gleitenden Median überschreitet, eine Vorentflammung erkannt wird. Diese Vorgehensweise bei der auf der Grundlage der Signale einer Abtastung eines Geberrades eine Folge von Winkelwerten der Kurbel- oder Nockenwelle der Verbrennungskraftmaschine bestimmt wird, ist nach Anspruch der Anmelderin verbesserungswürdig, da die Winkelgeschwindigkeit der Kurbelwelle auch durch andere Faktoren beeinflusst ist und zudem bei einer Mehrzahl von grundsätzlich baugleichen Brennkraftmaschinen der Verlauf der Winkelgeschwindigkeit der Kurbelwelle (auch ohne Vorentflammungen) unterschiedlich sein kann. Diese Unterschiede können insbesondere toleranzbedingt sein oder sich aus der Integration der einzelnen Brennkraftmaschinen in unterschiedliche Antriebsstränge ergeben.

Ausgehend von diesem Stand der Technik lag der Erfindung die Aufgabe zugrunde, eine Möglichkeit anzugeben, mit einem möglichst geringen Applikationsaufwand eine möglichst sichere Erkennung von Vorentflammungen in Brennräumen einer Brennkraftmaschine zu gewährleisten.

Diese Aufgabe wird durch ein Verfahren gemäß dem Patentanspruch 1 gelöst. Ein für die Steuerung eines solchen Verfahrens geeignetes Steuergerät ist Gegenstand des Patentanspruchs 12. Eine Brennkraftmaschine mit einem solchen Steuergerät ist Gegenstand des Patentanspruchs 13. Vorteilhafte Ausführungsformen des erfindungsgemäßen Verfahrens sind Gegenstand der weiteren anhängigen Patentansprüche 2 bis 11 und ergeben sich aus der nachfolgenden Beschreibung der Erfindung.

Das Verfahren dient der interpretierenden Erkennung einer Vorentflammung in einem Brennraum einer Brennkraftmaschine. Dabei erfolgt keine direkte Erkennung einer Vorentflammung, sondern vielmehr wird ein Ereignis erkannt, von dem aus auf eine Vorentflammung geschlossen wird ("interpretierende Erkennung").

Verfahren zur interpretierenden Erkennung einer Vorentflammung in einem Brennraum einer Brennkraftmaschine zeichnet sich dadurch aus, dass eine Winkelgeschwindigkeit oder eine Winkelbeschleunigung einer Kurbelwelle der Brennkraftmaschine oder einer von der Kurbelwelle der Brennkraftmaschine drehangetriebenen Komponente mittels einer Sensorvorrichtung ermittelt wird, wobei ein eine Verbrennung in dem Brennraum charakterisierendes Merkmal mittels einer Änderung der ermittelten Winkelgeschwindigkeit oder der ermittelten Winkelbeschleunigung ermittelt wird, wobei anhand eines Parameters entweder eines Kurbelwellenwinkels oder eines Kurbelwellenwinkelbereichs, der die relative Lage des Auftretens des Merkmals innerhalb einer Umdrehung der Kurbelwelle oder der Komponente definiert, zwischen einer gewollten Verbrennung und einer Vorentflammung automatisch unterschieden wird, wobei ein Schwellenwert für den Parameter definiert wird, der einen einer gewollten Verbrennung zugeordneten ersten Parameterbereich von einem einer Vorentflammung zugeordneten zweiten Parameterbereich abgrenzt, wobei anhand einer Mittelungsmethode für zeitlich diskrete Segmente mehrerer aus einer gewollten Verbrennung resultierenden Parameter periodisch ein Mittelwert gebildet und dabei ein Adaptionswert für den Schwellenwert abgeleitet wird, wobei der interpolierte Verlauf der Adaptionswerte dadurch den gemittelten Verlauf des Kurbelwellenwinkelbereichs repräsentiert, innerhalb dessen die als gewollte Verbrennung interpretierten Merkmale angeordnet sind, wobei eine Adaption des Schwellenwertes dadurch erfolgt, dass ein Kurbelwinkelabstand zwischen dem Schwellenwert und dem Adaptionswert im Wesentlichen gleich gehalten wird.

Es wird also ein Schwellenwert für den Parameter definiert, der den einer gewollten Verbrennung zugeordneten ersten Parameterbereich von dem einer Vorentflammung zugeordneten zweiten Parameterbereich abgrenzt. Anschließend wird das ermittelte Merkmal anhand eines diesem zugeordneten Wertes des Parameters in den ersten oder zweiten Parameterbereich eingeordnet.

Es ist vorgesehen, dass während des Betriebs der Brennkraftmaschine eine Adaption für den Schwellenwert durchgeführt wird, indem der Abstand eines einem ermittelten Merkmal zugeordneten Wertes des Parameters, der in dem ersten Parameterbereich liegt, zu dem Schwellenwert ermittelt und daraus ein Adaptionswert (auch Null) für den Schwellenwert abgeleitet wird. Dadurch wird ermöglicht, im Betrieb der Brennkraftmaschine abweichende relative Lagen für die gewollte Verbrennung (insbesondere die entsprechenden realen Zündzeitpunkte) zu erkennen und durch eine entsprechende Anpassung des Schwellenwertes die Genauigkeit der Unterscheidung zwischen denjenigen Merkmalen, die einer gewollten Verbrennung zugeordnet werden, und denjenigen Merkmalen, die als eine Vorentflammung interpretiert werden, zu erhöhen oder auf einem möglichst hohen Niveau zu halten.

Abweichungen der Lagen der gewollten Verbrennungen können sich dabei während des Betriebs ergeben, so dass als Basiswert für diesen Vergleich ein (Mittel-)Wert des Parameters für eine oder mehrere vorhergehende gewollte Verbrennungen genutzt werden kann. Als Basiswert für den Vergleich abweichender Lagen für die gewollte Verbrennung kann aber auch ein Wert für den Parameter vorgesehen sein, der anhand einer Applikation für eine baugleiche Brennkraftmaschine ermittelt wurde.

Das Verfahren sieht folglich eine (selbsttätige) Adaption an individuelle Brennkraftmaschinen oder individuelle, solche Brennkraftmaschinen integrierende Antriebsstränge vor, wodurch eine möglichst hohe Genauigkeit der Erkennung von Vorentflammungen erreicht werden kann. Dies kann insbesondere dazu genutzt werden, Serienstreuungen von Brennkraftmaschine oder Antriebssträngen, für die eine vorhergehende Applikation durchgeführt wurde, zu kompensieren. Das Verfahren kann jedoch infolge der Adaption auch ermöglichen, teilweise oder vollständig auf solche Applikationen, die dazu dienen, Merkmale exakt zu definieren, die auf eine Vorentflammung schließen lassen, zu verzichten.

Vorzugsweise ist vorgesehen, dass das Verfahren mehrfach über einen längeren Zeitraum durchgeführt wird, wodurch eine kontinuierliche oder quasikontinuierliche Anpassung des Schwellenwertes erreicht werden kann. Dadurch kann zum einen auf sich ändernde Umstände im Betrieb der Brennkraftmaschine reagiert werden und/oder zum anderen eine kontinuierlich zunehmende Verbesserung der Erkennungsgenauigkeit für Vorentflammungen erreicht werden. Dabei kann auch ausgenutzt werden, dass Merkmale, die durch gewollte Verbrennungen auftreten, in einem realen Betrieb der Kraftmaschine deutlich häufiger auftreten als solche Merkmale, die aus einer Vorentflammung resultieren.

In einer Ausführungsform des Verfahrens kann vorgesehen sein, dass das Merkmal mehrfach nacheinander ermittelt wird und eine Adaption erst beginnend mit der Ermittlung einer definierten Mindestanzahl an Merkmalen durchgeführt wird. Dies kann insbesondere ermöglichen, diejenigen Merkmale, die vor dem Beginn der Adaption ermittelt wurden, zu nutzen, um einen Ausgangsschwellenwert und/oder ein Ausgangsadaptionswert zu ermitteln. Dies kann insbesondere dann sinnvoll sein, wenn für die Brennkraftmaschine, bei deren Betrieb das Verfahren zur Anwendung kommt, zuvor nicht mittels einer Applikation ein entsprechender Ausgangsschwellenwert ermittelt wurde.

Bei der Brennkraftmaschine kann sich eine Abhängigkeit der relativen Lage einer gewollten Verbrennung beziehungsweise des die gewollte Verbrennung definierenden Merkmals von der Drehzahl ergeben. Dies kann zum einen darin begründet sein, dass bei vielen Brennkraftmaschinen ein Zündzeitpunkt, d.h. insbesondere der Kurbelwellenwinkel, an dem eine Zündung eingeleitet wird, mit sich ändernden Drehzahlen verschoben wird. Andererseits kann sich eine solche Abhängigkeit auch daraus ergeben, dass für die Ausbreitung einer Flammenfront einer Verbrennung, die zu einer Erhöhung des Drucks in dem Brennraum führt, anhand dessen wiederum (direkt, insbesondere jedoch indirekt) auf das Merkmal geschlossen werden kann, eine definierte Zeitspanne erforderlich ist. Eine solche definierte Zeitspanne entspricht bei niedrigeren Drehzahlen einem kleineren Winkelbereich als bei größeren Drehzahlen. Um diese Abhängigkeit eines aus einer gewollten Verbrennung resultierenden Merkmals zu eliminieren kann vorzugsweise vorgesehen sein, für den Wert des Parameters (insbesondere ein (Kurbelwellen-)Winkel), der diesem Merkmal zugeordnet ist, von dem ermittelten Wert des Parameters einen den entsprechenden Zündzeitpunkt wiedergebenden Wert des Parameters abzuziehen, um so den Abstand zwischen dem ermittelten Wert und dem Wert des Zündzeitpunkts zu ermitteln (Normierung des Parameters).

In einer Ausführungsform des Verfahrens kann weiterhin vorgesehen sein, dass mehrere sich hinsichtlich eines Einflussparameters unterscheidende Bereiche definiert werden, wobei unterschiedlich definierte Ausgangsschwellenwerte für diese Bereiche genutzt werden und/oder bei einem Bereichswechsel der Adaptionswert für den Schwellenwert auf einen Ausgangsadaptionswert zurückgesetzt wird. Dabei wird unter einem "Einflussparameter" ein Parameter verstanden, dessen Änderung einen Einfluss auf den Wert des dem Merkmal zugeordneten Parameters aufweist (unabhängig davon, ob das Merkmal aus einer Vorentflammung oder einer gewollten Verbrennung resultiert). Insbesondere kann es sich bei dem Einflussparameter um die Drehzahl (d.h. eigentlich eine gemittelte Winkelgeschwindigkeit) handeln. Somit kann insbesondere vorgesehen sein, Drehzahlbereiche zu definieren, wobei bei einem Betrieb der Brennkraftmaschine innerhalb eines Drehzahlbereichs eine Adaption für einen Schwellenwert durchgeführt wird, was insbesondere mehrfach und besonders bevorzugt kontinuierlich erfolgen kann, wodurch sich ein Schwellenwertverlauf über der Zeit ergibt. Wird eine Grenze zu diesem Drehzahlbereich überschritten, kann dann vorgesehen sein, eine neue Adaption basierend auf einem anderen, zuvor definierten Ausgangsschwellenwert zu starten und/oder den zuvor ermittelten Adaptionswert zurückzusetzen (insbesondere auf Null). Bei einem Zurücksetzen des Adaptionswertes kann dann vorgesehen sein, für mehrere oder alle Drehzahlbereiche denselben Ausgangsschwellenwert zu verwenden.

In einer Weiterbildung dieser Ausführungsform des Verfahrens kann dann noch vorgesehen sein, dass in einem oder allen der Bereiche eine Adaption erst beginnend mit der Ermittlung einer definierten Mindestanzahl an Merkmalen durchgeführt wird, wobei aus den vor Beginn der Adaption ermittelten Merkmalen jeweils ein Ausgangsschwellenwert und/oder ein Ausgangsadaptionswert ermittelt wird.

In einer weiterhin bevorzugten Ausgestaltung des Verfahrens kann zudem vorgesehen sein, dass das Merkmal mehrfach nacheinander (und insbesondere kontinuierlich) ermittelt wird, wobei für mehrere dem ersten Parameterbereich zugeordnete Merkmale ein Mittelwert gebildet wird, aus dem der Adaptionswert abgeleitet wird. Dadurch kann ausgenutzt werden, dass bei einem realen Betrieb der Brennkraftmaschine deutlich mehr Merkmale, die aus einer gewollten Verbrennung resultieren, als Merkmale, die aus einer Vorentflammung resultieren, auftreten. Zum Erreichen einer hohen Erkennungsgenauigkeit muss daher nicht eine Adaption des Schwellenwertes ausgehend von jedem aus einer gewollten Verbrennung resultierenden Merkmal vorgenommen werden, sondern vielmehr kann ein Mittelwert aus einer definierten Anzahl entsprechender (möglichst direkt hintereinander aufgetretener) Merkmale gebildet werden, der dann zur Adaption herangezogen werden kann. Dadurch kann der Rechenaufwand für die Durchführung des Verfahrens relativ gering gehalten werden.

Bei einer Brennkraftmaschine, die mehrere Brennräume ausbildet, in denen gewollte Verbrennungen in den Brennräumen phasenversetzt bezüglich der Rotation einer gemeinsam angetriebenen Abtriebswelle erfolgen, ist vorzugsweise vorgesehen, das Verfahren individuell für einzelne (insbesondere alle) Zylinder durchzuführen, um für die einzelnen Zylinder individuelle Erkennungen von Vorentflammungen zu realisieren. Dies kann erreicht werden, indem eine Zuordnung des ermittelten Merkmals zu einem bestimmten Brennraum der mehrere Brennräume umfassenden Brennkraftmaschine durch ein Zuordnen des dem Merkmal (insbesondere eines Merkmals, das aus einer gewollten Verbrennung resultiert) zugeordneten Parameters in ein dem bestimmten Brennraum zugeordnetes Parametersegment erfolgt. Bei dem Parametersegment kann es sich insbesondere um einen Winkelbereich innerhalb einer oder von zwei (bei einer Viertakt-Brennkraftmaschine) Umdrehungen der Abtriebswelle (insbesondere Kurbelwelle) handeln.

Das Verfahren wird zur Erkennung von Vorentflammungen in Hubkolben-Brennkraftmaschinen genutzt.

Erfindungsgemäß wird als charakterisierendes Merkmal die Winkelbeschleunigung einer Kurbelwelle der Brennkraftmaschine und als Parameter der Kurbelwellenwinkel (gegebenenfalls normiert) genutzt. Da Vorentflammungen prinzipiell ein Problem fremdgezündeter Brennkraftmaschinen ist, ist das Verfahren insbesondere bei einer solchen Brennkraftmaschine vorteilhaft anwendbar. Eine fremdgezündete Hubkolben-Brennkraftmaschine kann insbesondere nach dem Otto-Prinzip (Ottomotor) betrieben werden.

Gegenstand der Erfindung ist neben dem Verfahren auch ein Steuergerät mit einem Speicher, in dem Speicher ein Programm hinterlegt ist, bei dessen Ausführung das erfindungsgemäße Verfahren durchgeführt wird.

Die Brennkraftmaschine umfasst mindestens einen Brennraum, ein Steuergerät mit einem Speicher, in dem Speicher ist ein Programm hinterlegt und eine Sensorvorrichtung zur Ermittlung einer Winkelgeschwindigkeit oder einer Winkelbeschleunigung einer Kurbelwelle der Brennkraftmaschine oder einer von der Kurbelwelle der Brennkraftmaschine drehangetriebenen Komponente.

Die Erfindung betrifft weiterhin ein Kraftfahrzeug mit einer solchen Brennkraftmaschine, die insbesondere direkt oder indirekt als Antriebsmotor für das Kraftfahrzeug dient.

Die vorliegende Erfindung wird nachfolgend anhand eines in den Zeichnungen dargestellten Ausführungsbeispiels näher erläutert. In den Zeichnungen zeigt:
- Fig. 1:: zeitliche Verläufe eines Brennraumdrucks, zum einen resultierend aus einer gewollten Verbrennung und zum anderen resultierend aus einer Vorentflammung;
- Fig. 2:: in einem Diagramm das dem erfindungsgemäßen Verfahren zugrunde liegende Prinzip; und
- Fig. 3:: ein Kraftfahrzeug mit einer erfindungsgemäßen Brennkraftmaschine in einer Ansicht von oben.

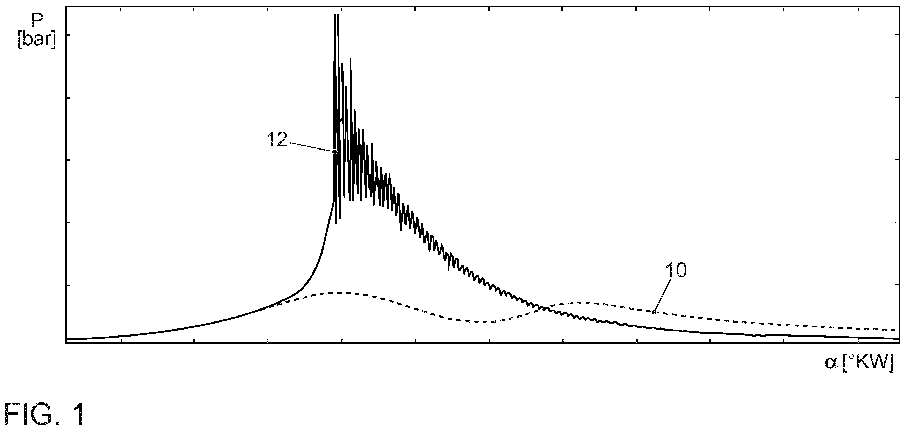

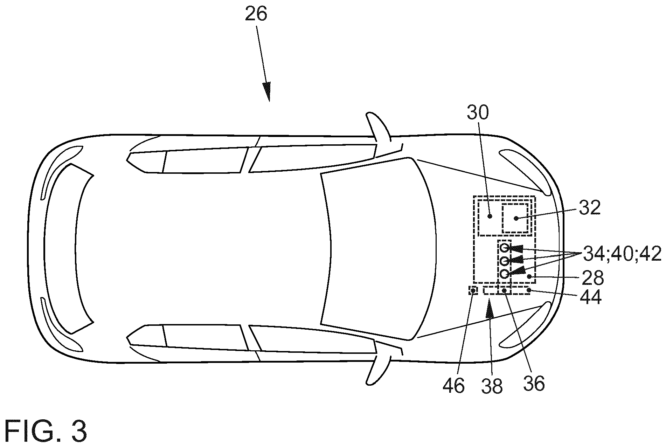

Die Fig. 1 zeigt vereinfacht für einen Zylinder 40 einer erfindungsgemäßen Brennkraftmaschine 28 (vgl. Fig. 3) beispielhaft zeitliche Verläufe des Drucks in einem Brennraum 34 des Zylinders 40 (Brennraumdruck), in einem Winkelbereich einer Umdrehung einer Kurbelwelle 36 der Brennkraftmaschine 28. Dieser Winkelbereich umfasst einen oberen Totpunkt eines in dem Zylinder 40 durch die Kurbelwelle 36 zyklisch auf und ab geführten Kolbens 42 sowie einen Zündzeitpunkt, in dem eine gewollte Verbrennung eines Kraftstoff-Luft-Gemisches in dem Brennraum 34, durch die Erzeugung eines Zündfunkens eingeleitet wird.

Die gestrichelte Kurve 10 zeigt dabei einen exemplarischen Verlauf des Brennraumdrucks, wie er sich bei einer gewollten Verbrennung ohne Vorentflammung einstellen würde. Dabei stellt die erste Erhebung einen temporären Anstieg des Brennraumdrucks dar, der aus der Verdichtung des Kraftstoff-Luft-Gemisches im oberen Totpunkt des Kolbens 42 resultiert. Die zweite Erhebung stellt den aus der gewollten Verbrennung resultierenden Anstieg des Brennraumdrucks dar. Die durchgehende Kurve 12 zeigt dagegen einen exemplarischen Verlauf des Brennraumdrucks, wie er sich aus einer Vorentflammung einstellen würde. Zu erkennen ist, dass der Brennraumdruck, der aus einer Vorentflammung resultiert, deutlich größer sein kann, als der maximale Brennraumdruck, der sich bei einem Betrieb mit lediglich gewollten Verbrennungen einstellt. Der aus der Vorentflammung resultierende Brennraumdruck wird zudem noch durch den aus der Verdichtung resultierenden Brennraumdruck verstärkt. Dies gilt insbesondere, wenn die Vorentflammung einsetzt, bevor der Kolben den oberen Totpunkt erreicht hat.

Bei einer Brennkraftmaschine 28, die für einen realen Betrieb in einem Kraftfahrzeug 26 vorgesehen ist, ist eine kontinuierliche Messung des Brennraumdrucks derzeit nicht umsetzbar. Da jedoch basierend auf dem Verlauf des Brennraumdrucks eine Erkennung von Vorentflammungen erfolgen soll, wird auf ein Merkmal zurückgegriffen, dass den Brennraumdruck mit ausreichender Genauigkeit repräsentiert.

Bei diesem Merkmal handelt es sich im vorliegenden Ausführungsbeispiel um die Winkelgeschwindigkeit der Kurbelwelle 36 und konkret um die Änderung dieser Winkelgeschwindigkeit (Winkelbeschleunigung der Kurbelwelle 36). Der Brennraumdruck hat einen direkten Einfluss auf die Bewegung des Kolbens 42 in dem Zylinder 40 und damit auf die Winkelgeschwindigkeit der Kurbelwelle 36. Dabei führt eine Vorentflammung nicht immer zu einer Erhöhung der Winkelgeschwindigkeit, sondern kann diese auch verringern. Dies ist dann der Fall, wenn die Vorentflammung einsetzt, bevor der Kolben 42 den oberen Totpunkt erreicht, weil dann der aus der Vorentflammung resultierende Brennraumdruck der Bewegung des Kolbens 42 entgegenwirkt.

Die Winkelgeschwindigkeit der Kurbelwelle 36 kann beispielsweise mittels einer Sensorvorrichtung 38 ermittelt werden, die auf einem drehfest mit der Kurbelwelle 36 verbundenen Geberrad 44 basiert (vgl. Fig. 3), das in gleichmäßiger Teilung und somit mit gleichmäßigem Winkelabstand diskrete Erkennungsmerkmale aufweist, die mittels eines nicht mitrotierenden Sensors 46 detektiert werden können. Beispielsweise kann das Geberrad mit einer Umfangsverzahnung ausgebildet sein, wobei ein Vorbeibewegen der einzelnen Zähne von dem Sensor 46 erfasst wird. Aus der Zeit, die zwischen der Detektion von zwei benachbarten Zähnen vergeht, kann dann die Winkelgeschwindigkeit des Geberrads 44 und damit der Kurbelwelle 36 ermittelt werden.

Problematisch bei dieser Vorgehensweise ist, dass die Winkelgeschwindigkeit der Kurbelwelle 36 auch durch andere Faktoren beeinflusst ist und zudem bei einer Mehrzahl von grundsätzlich baugleichen Brennkraftmaschinen 28 der Verlauf der Winkelgeschwindigkeit der Kurbelwelle 36 (auch ohne Vorentflammungen) unterschiedlich sein kann. Diese Unterschiede können insbesondere toleranzbedingt sein oder sich aus der Integration der einzelnen Brennkraftmaschinen 28 in unterschiedliche Antriebsstränge ergeben.

Eine Folge daraus ist bislang, dass für ein gattungsgemäßes Verfahren zur Erkennung von Vorentflammungen, das darauf beruht Verbrennungen in einem Brennraum 34 einer Brennkraftmaschine 28 charakterisierende Merkmale zu ermitteln und diese anhand des Zeitpunkts innerhalb eines Winkelsegments einer Umdrehung der Kurbelwelle 36, zu dem diese auftreten, zu unterscheiden und so als gewollte Verbrennung oder als Vorentflammung zu interpretieren, eine aufwändige Kalibrierung für im Wesentlichen alle eine Brennkraftmaschine 28 einer Bauart umfassende Antriebsstränge erforderlich ist, um ausreichend hohe Erkennungsgenauigkeiten zu erzielen.

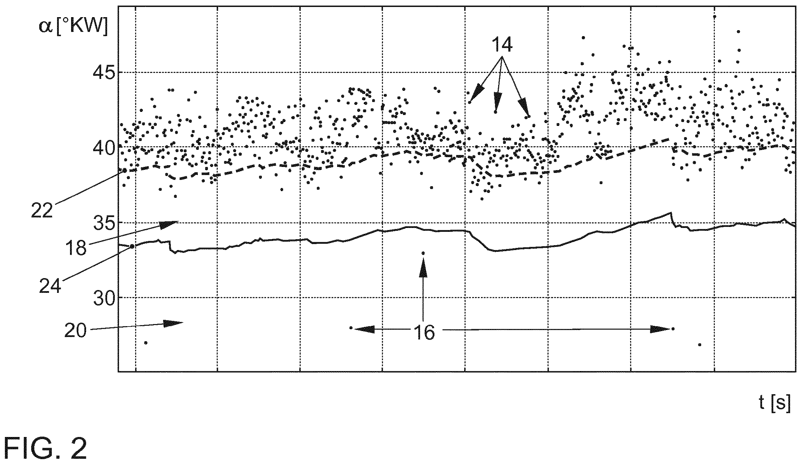

Dieser Aufwand für eine Vielzahl von Kalibrierungen verringert oder vermieden werden, indem für einen Schwellenwert des Parameters, hier des Kurbelwellenwinkels, der in Form eines Wertes jedem ermittelten Merkmal zugeordnet wird, im Betrieb eine Adaption durchgeführt wird. Das dieser Adaption zugrunde liegende Prinzip ist in der Fig. 2 in einem Diagramm dargestellt. Das Diagramm zeigt über der Zeit (Horizontalachse) diejenigen Kurbelwellenwinkel, zu denen die ermittelten Merkmale (Überschreiten eines Grenzwertes der Winkelgeschwindigkeit der Kurbelwelle) in einem quasistationären Betrieb der Brennkraftmaschine in einem Drehzahlbereich von 2000 bis 2500 Umdrehungen pro Minute aufgetreten sind. Dabei zeigt sich, dass der weitaus größte Teil der Merkmale in einem Kurbelwellenwinkelbereich von zwischen ca. 37°KW und ca. 48°KW aufgetreten sind. Bei diesen Merkmalen 14 handelt es sich um solche, die aus jeweils einer gewollten Verbrennung resultieren. Erkennbar sind aber auch vereinzelte Merkmale 16, die zumeist deutlich unter 33°KW aufgetreten sind. Hierbei handelt es sich um aus Vorentflammungen resultierende Merkmale 16.

Dieser relativ große Abstand (in °KW) der aus gewollten Verbrennungen resultierenden Merkmale 14 einerseits von den aus Vorentflammungen resultierenden Merkmalen 16 andererseits ermöglicht, eine automatische Unterscheidung zwischen diesen und damit eine interpretierende Erkennung von Vorentflammungen vorzunehmen, indem ein Schwellenwert für den Kurbelwellenwinkel definiert wird. Der Schwellenwert unterteilt zumindest ein Kurbelwellenwinkelsegment in einen ersten Kurbelwellenwinkelbereich 18 und einen zweiten Kurbelwellenwinkelbereich 20, wobei die in dem ersten Kurbelwellenwinkelbereich 18 liegenden Merkmale 14 als gewollte Verbrennungen und die in dem zweiten Kurbelwellenwinkelbereich20 liegenden Merkmale 16 als Vorentflammungen interpretiert werden.

Das Verfahren sieht eine Adaption des Schwellenwertes vor, um diesen an individuelle Brennkraftmaschinen und Antriebsstränge anzupassen und so eine möglichst hohe Erkennungsgenauigkeit zu erhalten. Dazu wird anhand einer beliebigen Mittelungsmethode für zeitlich diskrete Segmente, die mehrere Merkmale 14 umfassen können, periodisch ein Mittelwert gebildet, und daraus ein Adaptionswert für den Schwellenwert abgeleitet. Über der Zeit repräsentiert der interpolierte Verlauf der Adaptionswerte (vgl. gestrichelte Kurve 22 in der Fig. 2) dadurch den gemittelten Verlauf desjenigen streifenförmigen Bereichs des Kurbelwellenwinkels, innerhalb dessen die als gewollte Verbrennungen interpretierten Merkmale 14 angeordnet sind. Eine Adaption des Schwellenwertes erfolgt dann dadurch, dass der Abstand (in °KW) zwischen den Schwellenwerten und dem gemittelten Verlauf der gewollten Verbrennungen beziehungsweise dem Adaptionswert im Wesentlichen gleich gehalten wird (vgl. durchgezogene Kurve 24 in der Fig. 2).

Die Fig. 3 zeigt noch ein Fahrzeug (PKW) 26 mit einer Brennkraftmaschine 28. Die Brennkraftmaschine 28 bildet Brennräume 34 aus, die von Zylindern 40 und darin geführten Kolben 42 begrenzt werden. Die Kolben sind über Pleuel mit einer Kurbelwelle 36 verbunden. Eine durch gewollte Verbrennungen bewirkte Bewegung der Kolben 42 wird auf die Kurbelwelle 36 übertragen, wodurch die drehend angetrieben wird.

Die Brennkraftmaschine 28 umfasst weiterhin ein Steuergerät 30 (Motorsteuerung) mit einem Speicher 32, auf dem ein Programm hinterlegt ist, durch das das erfindungsgemäße Verfahren im Betrieb der Brennkraftmaschine 28 durchführbar ist. Zur Ermittlung der die in den Brennräumen 34 auftretenden Verbrennungen charakterisierenden Merkmale 14, 16, d.h. über einem Grenzwert liegende Winkelgeschwindigkeitsänderungen, ist zudem eine Sensorvorrichtung 38 vorgesehen, die auf einem Geberrad 44 und einem dazugehörigen Sensor 46 beruht.

### Bezugszeichenliste

- 10: Verlauf des Brennraumdrucks bei einer gewollten Verbrennung
- 12: Verlauf des Brennraumdrucks bei einer Vorentflammung
- 14: aus einer gewollten Verbrennung resultierendes Merkmal
- 16: aus einer Vorentflammung resultierendes Merkmal
- 18: erster Kurbelwellenwinkelbereich
- 20: zweiter Kurbelwellenwinkelbereich
- 22: interpolierter Verlauf der Adaptionswerte
- 24: Verlauf des Schwellenwertes
- 26: Kraftfahrzeug
- 28: Brennkraftmaschine
- 30: Steuergerät
- 32: Speicher
- 34: Brennraum
- 36: Kurbelwelle
- 38: Sensorvorrichtung
- 40: Zylinder
- 42: Kolben
- 44: Geberrad
- 46: Sensor

## Patentansprüche

1. Verfahren zur interpretierenden Erkennung einer Vorentflammung in einem Brennraum (34) einer Brennkraftmaschine (28),
wobei eine Winkelgeschwindigkeit oder eine Winkelbeschleunigung einer Kurbelwelle (36) der Brennkraftmaschine (28) oder einer von der Kurbelwelle (36) der Brennkraftmaschine (28) drehangetriebenen Komponente mittels einer Sensorvorrichtung (38) ermittelt wird,
wobei ein eine Verbrennung in dem Brennraum (34) charakterisierendes Merkmal (14, 16) mittels einer Änderung der ermittelten Winkelgeschwindigkeit oder der ermittelten Winkelbeschleunigung ermittelt wird,
wobei anhand eines Parameters entweder eines Kurbelwellenwinkels oder eines Kurbelwellenwinkelbereichs, der die relative Lage des Auftretens des Merkmals innerhalb einer Umdrehung der Kurbelwelle oder der Komponente definiert, zwischen einer gewollten Verbrennung und einer Vorentflammung automatisch unterschieden wird,
wobei ein Schwellenwert für den Parameter definiert wird, der einen einer gewollten Verbrennung zugeordneten ersten Parameterbereich von einem einer Vorentflammung zugeordneten zweiten Parameterbereich abgrenzt,
wobei anhand einer Mittelungsmethode für zeitlich diskrete Segmente mehrerer aus einer gewollten Verbrennung resultierenden Parameter periodisch ein Mittelwert gebildet und dabei ein Adaptionswert (22) für den Schwellenwert (24) abgeleitet wird, wobei der interpolierte Verlauf der Adaptionswerte (22) dadurch den gemittelten Verlauf des Kurbelwellenwinkelbereichs repräsentiert, innerhalb dessen die als gewollte Verbrennung interpretierten Merkmale (14) angeordnet sind,
wobei eine Adaption des Schwellenwertes (24) dadurch erfolgt, dass ein Kurbelwinkelabstand zwischen dem Schwellenwert (24) und dem Adaptionswert (22) im Wesentlichen gleich gehalten wird.

2. Verfahren nach Anspruch 1, **dadurch gekennzeichnet, dass** die resultierenden charakterisierenden Merkmale (14, 16) mehrfach nacheinander ermittelt werden und die Adaption erst beginnend mit der Ermittlung einer definierten Mindestanzahl an resultierenden charakterisierenden Merkmalen (14, 16) durchgeführt wird.

3. Verfahren nach Anspruch 2, **dadurch gekennzeichnet, dass** aus den vor Beginn der Adaption ermittelten resultierenden charakterisierenden Merkmalen (14, 16) ein Ausgangsschwellenwert und/oder ein Ausgangsadaptionswert ermittelt wird.

4. Verfahren nach mindestens einem der Ansprüche 1 bis 3, **dadurch gekennzeichnet, dass** mehrere sich hinsichtlich eines Einflussparameters unterscheidende Bereiche für den Betrieb der Brennkraftmaschine (28) definiert werden, wobei für diese Bereiche unterschiedlich definierte Ausgangsschwellenwerte genutzt werden und/oder bei einem Bereichswechsel der Adaptionswert (22) für den Schwellenwert (24) auf einen Ausgangsadaptionswert zurückgesetzt wird.

5. Verfahren nach den Ansprüchen 3 und 4, **dadurch gekennzeichnet, dass** für mehrere der Bereiche jeweils ein Ausgangsschwellenwert und/oder ein Ausgangsadaptionswert aus vor Beginn der Adaption ermittelten resultierenden charakterisierenden Merkmalen (14, 16) ermittelt wird/werden.

6. Verfahren nach Anspruch 1, **dadurch gekennzeichnet, dass** eine Zuordnung des ermittelten resultierenden charakterisierenden Merkmal (14, 16) zu einem bestimmten Brennraum (34) der mehrere Brennräume (34) umfassenden Brennkraftmaschine (28) durch ein Zuordnen des den resultierenden charakterisierenden Merkmalen (14, 16) zugeordneten Parameters in ein dem bestimmten Brennraum (28) zugeordnetes Parametersegment erfolgt.

7. Verfahren nach Anspruch 4, **dadurch gekennzeichnet, dass** als Einflussparameter die Drehzahl verwendet wird.

8. Verfahren nach Anspruch 7, **dadurch gekennzeichnet, dass** Drehzahlbereiche definiert werden, wobei bei einem Betrieb der Brennkraftmaschine innerhalb eines Drehzahlbereichs die Adaption für einen Schwellenwert (24) durchgeführt wird, wodurch sich innerhalb des Drehzahlbereichs ein Schwellenwertverlauf über der Zeit ergibt, wobei dann, wenn eine Grenze zu diesem Drehzahlbereich überschritten wird, eine neue Adaption basierend auf einem anderen, zuvor definierten Ausgangsschwellenwert gestartet und/oder der zuvor ermittelte Adaptionswert (22) zurückgesetzt wird.

9. Verfahren nach Anspruch 8, **dadurch gekennzeichnet, dass** bei einem Zurücksetzen des Adaptionswertes (22) mehrere oder alle Drehzahlbereiche denselben Ausgangsschwellenwert verwenden.

10. Verfahren nach Anspruch 1 und 8, **dadurch gekennzeichnet, dass** innerhalb eines Drehzahlbereichs die Adaption für den Schwellenwert (24) durchgeführt wird, wobei die Adaption mehrfach oder kontinuierlich erfolgt.

11. Verfahren nach Anspruch 1, **dadurch gekennzeichnet, dass** der Parameter normiert wird, in dem ein Wert des Kurbelwellenwinkels, den resultierenden charakterisierenden Merkmalen (14, 16) zugeordnet ist, von dem ermittelten Wert des Parameters ein den entsprechenden Zündzeitpunkt wiedergebender Wert des Parameters abgezogen wird, um den Abstand zwischen dem ermittelten Wert des Parameters und dem Wert zum Zündzeitpunkt des Parameters zu ermitteln.

12. Steuergerät (30) mit einem Speicher (32), **dadurch gekennzeichnet, dass** in dem Speicher (32) ein Programm hinterlegt ist, bei dessen Ausführung in einer Brennkraftmaschine gemäß Anspruch 13 ein Verfahren gemäß den Ansprüchen 1 bis 11 durchgeführt wird.

13. Brennkraftmaschine (28) mit mindestens einem Brennraum (34), einem Steuergerät (30) gemäß Anspruch 12 und einer Sensorvorrichtung (38) zur Ermittlung einer Winkelgeschwindigkeit oder einer Winkelbeschleunigung einer Kurbelwelle (36) der Brennkraftmaschine (28) oder einer von der Kurbelwelle (36) der Brennkraftmaschine (28) drehangetriebenen Komponente.

## Claims

1. Method for the interpretative identification of a premature ignition in a combustion chamber (34) of an internal combustion engine (28),
wherein an angular velocity or an angular acceleration of a crankshaft (36) of the internal combustion engine (28) or of a component rotationally driven by the crankshaft (36) of the internal combustion engine (28) is determined by means of a sensor device (38),
wherein a feature (14, 16) characterizing a combustion in the combustion chamber (34) is determined by means of a change in the determined angular velocity or the determined angular acceleration,
wherein, on the basis of a parameter either of a crankshaft angle or of a crankshaft angular range defining the relative position of the occurrence of the feature within a revolution of the crankshaft or of the component, a distinction is automatically made between an intended combustion and a premature ignition,
wherein a threshold value for the parameter is defined that delimits a first parameter range assigned to an intended combustion from a second parameter range assigned to a premature ignition, wherein, on the basis of an averaging method for temporally discrete segments of a plurality of parameters resulting from an intended combustion, a mean value is periodically formed and an adaptation value (22) for the threshold value (24) is derived, wherein the interpolated profile of the adaptation values (22) thereby represents the average profile of the crankshaft angular range, within which the features (14) interpreted as an intended combustion are arranged,
wherein the threshold value (24) is adapted by a crank angle interval between the threshold value (24) and the adaptation value (22) being kept substantially constant.

2. Method according to Claim 1, **characterized in that** the resulting characteristic features (14, 16) are repeatedly determined successively, and the adaptation is carried out only starting from the determination of a defined minimum number of resulting characterizing features (14, 16).

3. Method according to Claim 2, **characterized in that** a starting threshold value and/or a starting adaptation value is determined from the resulting characterizing features (14, 16) determined before the start of the adaptation.

4. Method according to at least one of Claims 1 to 3, **characterized in that** a plurality of differentiating ranges in respect of an influencing parameter are defined for the operation of the internal combustion engine (28), wherein, for these ranges, differently defined starting threshold values are used and/or, in the event of a change in range, the adaptation value (22) for the threshold value (24) is reset to a starting adaptation value.

5. Method according to Claims 3 and 4, **characterized in that**, for a plurality of the ranges, in each case a starting threshold value and/or a starting adaptation value is/are determined from resulting characterizing features (14, 16) determined before starting the adaptation.

6. Method according to Claim 1, **characterized in that** the determined resulting characterizing feature (14, 16) is assigned to a certain combustion chamber (34) of the internal combustion engine (28) comprising a plurality of combustion chambers (34) by assignment of the parameter assigned to the resulting characterizing features (14, 16) to a parameter segment assigned to the certain combustion chamber (28).

7. Method according to Claim 4, **characterized in that** the rotational speed is used as influencing parameter.

8. Method according to Claim 7, **characterized in that** rotational speed ranges are defined, wherein, during operation of the internal combustion engine within a rotational speed range, the adaptation for a threshold value (24) is carried out, as a result of which a threshold value profile over time is produced within the rotational speed range, wherein, whenever a limit for said rotational speed range is exceeded, a new adaptation on the basis of another, previously defined starting threshold value is started and/or the previously determined adaptation value (22) is reset.

9. Method according to Claim 8, **characterized in that** a plurality or all of the rotational speed ranges use the same starting threshold value for resetting the adaptation value (22).

10. Method according to Claims 1 and 8, **characterized in that** the adaptation of the threshold value (24) is carried out within a rotational speed range, wherein the adaptation takes place repeatedly or continuously.

11. Method according to Claim 1, **characterized in that** the parameter is standardized **in that** a value of the crankshaft angle is assigned to the resulting characterizing features (14, 16), and from the determined value of the parameter a value of the parameter reproducing the corresponding ignition time is subtracted in order to determine the interval between the determined value of the parameter and the value at the ignition time of the parameter.

12. Control unit (30) having a memory (32), **characterized in that** a programme is stored in the memory (32), upon the execution of which programme a method according to Claims 1 to 11 is carried out in an internal combustion engine according to Claim 13.

13. Internal combustion engine (28) having at least one combustion chamber (34), a control unit (30) according to Claim 12 and a sensor device (38) for determining an angular velocity or an angular acceleration of a crankshaft (36) of the internal combustion engine (28) or a component rotationally driven by the crankshaft (36) of the internal combustion engine (28).

## Revendications

1. Procédé de détection interprétative de pré-allumage dans une chambre de combustion (34) d'un moteur à combustion interne (28),
une vitesse angulaire ou une accélération angulaire d'un vilebrequin (36) du moteur à combustion interne (28) ou d'un composant, entraîné en rotation par le vilebrequin (36) du moteur à combustion interne (28), étant déterminée au moyen d'un dispositif de détection (38),
une caractéristique (14, 16), caractérisant la combustion dans la chambre de combustion (34), étant déterminée au moyen d'une variation de la vitesse angulaire déterminée ou de l'accélération angulaire déterminée,
une distinction étant faite automatiquement entre une combustion souhaitée et un pré-allumage sur la base d'un paramètre d'un angle de vilebrequin ou d'une plage d'angles de vilebrequin qui définit la position relative de l'apparition de la caractéristique dans un tour du vilebrequin ou du composant,
une valeur seuil étant définie pour le paramètre, laquelle délimite une première plage de paramètres, associée à une combustion souhaitée, d'une deuxième plage de paramètres associée à un pré-allumage,
une valeur moyenne étant formée périodiquement, et une valeur d'adaptation (22) de la valeur seuil (24) étant dérivée de celle-ci, sur la base d'un procédé de calcul de moyenne pour des segments temporellement discrets de plusieurs paramètres résultant d'une combustion souhaitée,
le profil interpolé des valeurs d'adaptation (22) représentant ainsi le profil moyen de la plage d'angles de vilebrequin dans laquelle sont situées les caractéristiques (14) interprétées comme une combustion souhaitée,
une adaptation de la valeur seuil (24) étant effectuée en ce qu'une distance d'angle de vilebrequin entre la valeur seuil (24) et la valeur d'adaptation (22) est maintenue sensiblement la même.

2. Procédé selon la revendication 1, **caractérisé en ce que** les caractéristiques résultantes (14, 16) sont déterminées plusieurs fois de suite et l'adaptation n'est effectuée qu'à partir de la détermination d'un nombre minimal défini de caractéristiques résultantes (14, 16).

3. Procédé selon la revendication 2, **caractérisé en ce qu'**une valeur seuil initiale et/ou une valeur d'adaptation initiale sont déterminées à partir des caractéristiques résultantes (14, 16) déterminées avant le début de l'adaptation.

4. Procédé selon l'une au moins des revendications 1 à 3, **caractérisé en ce que** plusieurs zones différentes quant à un paramètre d'influence sont définies pour le fonctionnement du moteur à combustion interne (28), des valeurs seuil initiales définies étant utilisées différemment pour ces zones et/ou la valeur d'adaptation (22) pour la valeur seuil (24) étant réinitialisée à une valeur d'adaptation initiale lors d'un changement de zone.

5. Procédé selon les revendications 3 et 4, **caractérisé en ce qu'**une valeur seuil initiale et/ou une valeur d'adaptation initiale sont déterminées pour une pluralité des régions à partir de caractéristiques résultantes (14, 16) déterminées avant le début de l'adaptation.

6. Procédé selon la revendication 1, **caractérisé en ce qu'**une association de la caractéristique résultante déterminée (14, 16) à une chambre de combustion déterminée (34) de la pluralité de chambres de combustion (34) comprenant le moteur à combustion interne (28) est effectuée par une association du paramètre, associé aux caractéristiques résultantes (14, 16), dans un segment de paramètres associé à la chambre de combustion déterminée (28).

7. Procédé selon la revendication 4, **caractérisé en ce que** la vitesse de rotation est utilisée comme paramètre d'influence.

8. Procédé selon la revendication 7, **caractérisé en ce que** des plages de vitesse de rotation sont définies, l'adaptation pour une valeur seuil (24) étant effectuée lorsque le moteur à combustion interne fonctionne dans une plage de vitesse de rotation, ce qui donne un profil de valeurs seuils dans le temps à l'intérieur de la plage de vitesse de rotation, une nouvelle adaptation étant démarrée sur la base d'une autre valeur seuil initiale définie précédemment, et/ou la valeur d'adaptation précédemment déterminée (22) étant réinitialisée, lorsqu'une limite est dépassée pour ladite plage de vitesse de rotation.

9. Procédé selon la revendication 8, **caractérisé en ce que**, lorsque la valeur d'adaptation (22) est réinitialisée, une pluralité ou la totalité des plages de vitesse de rotation utilisent la même valeur seuil initiale.

10. Procédé selon les revendications 1 et 8, **caractérisé en ce que** l'adaptation pour la valeur seuil (24) est effectuée dans une plage de vitesse de rotation, l'adaptation étant effectuée plusieurs fois ou en continu.

11. Procédé selon la revendication 1, **caractérisé en ce que** le paramètre est normalisé par association d'une valeur de l'angle de vilebrequin aux caractéristiques résultantes (14, 16), par soustraction d'une valeur du paramètre, reflétant le point d'allumage correspondant, de la valeur déterminée du paramètre afin de déterminer la distance entre la valeur déterminée du paramètre et la valeur au point d'allumage du paramètre.

12. Unité de commande (30) comprenant une mémoire (32), **caractérisée en ce qu'**un programme est stocké dans la mémoire (32), un procédé selon les revendications 1 à 11 étant mis en œuvre lorsque ledit programme est exécuté dans un moteur à combustion interne selon la revendication 13.

13. Moteur à combustion interne (28) comprenant au moins une chambre de combustion (34), une unité de commande (30) selon la revendication 12 et un dispositif de détection (38) destiné à déterminer une vitesse angulaire ou une accélération angulaire d'un vilebrequin (36) du moteur à combustion interne (28) ou de l'un des composants entraînés en rotation par le vilebrequin (36) du moteur à combustion interne (28).
